(19) Europäisches Patentamt
European Patent Office
Office européen des brevets

(11) **EP 3 726 417 B1**

(12) # EUROPÄISCHE PATENTSCHRIFT

(45) Veröffentlichungstag und Bekanntmachung des Hinweises auf die Patenterteilung:
**10.07.2024 Patentblatt 2024/28**

(21) Anmeldenummer: **20157921.6**

(22) Anmeldetag: **18.02.2020**

(51) Internationale Patentklassifikation (IPC):
**G06F 30/23** *(2020.01)* **G06F 30/15** *(2020.01)*
**G06F 119/10** *(2020.01)*

(52) Gemeinsame Patentklassifikation (CPC):
**G06F 30/15; G06F 30/23;** G06F 2119/10

(54) **VERFAHREN ZUR MODELLBASIERTEN BERECHNUNG DER ZU ERWARTENDEN GERÄUSCHIMMISSION DURCH EINEN LÄNGS EINER BEWEGUNGSSTRECKE SELBSTANGETRIEBEN BEWEGTEN GEGENSTAND**

METHOD FOR MODEL-BASED CALCULATION OF THE EXPECTED NOISE IMISSION BY A MOVING OBJECT SELF-PROPELLED ALONG A PATH OF MOVEMENT

PROCÉDÉ DE CALCUL À BASE DE MODÈLE DE L'IMMISSION ACOUSTIQUE ATTENDUE D'UN OBJET AUTOMOBILE PROPELLÉ SUR UNE CHEMIN DE DÉPLACEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.04.2019 DE 102019110125**

(43) Veröffentlichungstag der Anmeldung:
**21.10.2020 Patentblatt 2020/43**

(73) Patentinhaber: **Friedrich Boysen GmbH & Co. KG**
**72213 Altensteig (DE)**

(72) Erfinder:
• **Gamst, Marvin**
**72459 Albstadt (DE)**
• **Herbig, Michael**
**72250 Freudenstadt (DE)**
• **Münzing, Stephan**
**72221 Haiterbach (DE)**
• **Hombach, Martin**
**72213 Altensteig (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
WO-A1-2010/003836 WO-A2-02/052542
AT-B- 413 605 DE-A1- 19 910 329

• **RICHARD SOHANEY ET AL: "New ISO Test Track Specification for Measuring Tire and Vehicle Noise", SOUND & VIBRATION, vol. 46, no. 8, 1 August 2012 (2012-08-01), pages 9 - 14, XP055720908**
• **PARK SOON-HONG ET AL: "Visualization of pass-by noise by means of moving frame acoustic holography", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 110, no. 5, 1 November 2001 (2001-11-01), pages 2326 - 2339, XP012002586, ISSN: 0001-4966, DOI: 10.1121/1.1404976**

**Beschreibung**

Die vorliegende Erfindung betrifft ein Verfahren zur modellbasierten Berechnung der zu erwartenden Geräuschimmission durch einen längs einer Bewegungsstrecke selbstangetrieben bewegten Gegenstand, insbesondere durch ein motorgetriebenes Fahrzeug, an mindestens einem Ort im Hörbereich der Bewegungsstrecke.

Selbstangetrieben bewegbare Gegenstände wie Kraftfahrzeuge, Lokomotiven, Motorboote und dergleichen unterliegen zunehmend strengeren und komplexeren Auflagen hinsichtlich der zulässigen Geräuschemissionen. Aufgrund aktueller Vorschriften sind zum Beispiel bei der Fahrzeugentwicklung häufig aufwändige Geräuschmessungen unter typischen Betriebsbedingungen erforderlich, wobei zahlreiche Abhängigkeiten zu berücksichtigen sind. Besonders bedeutsam ist die Erfassung von sogenannten Vorbeifahrtgeräuschen, also denjenigen Geräuschimmissionen, die an einem ortsfesten Punkt zu empfangen sind, wenn sich der selbstangetriebene Gegenstand an dem Punkt vorbeibewegt. Die Durchführung entsprechender Messungen mittels eines im Freien an einer Messstrecke aufgestellten Mikrofons ist aufwändig und kostspielig. Grundsätzlich kann eine Erfassung von Vorbeifahrtgeräuschen auch an einem Prüfstand durchgeführt werden, der eine Reihe von getakteten Mikrofonen aufweist. Aufgrund der erforderlichen Größe eines solchen Prüfstands sowie der notwendigen Anzahl an aufgestellten Mikrofonen ist der Aufwand jedoch auch in diesem Fall beträchtlich.

Auch im Rahmen der Tongestaltung (Sound Design) an selbstangetrieben bewegbaren Gegenständen müssen häufig umfangreiche Geräuschmessungen durchgeführt werden, was mit einem unerwünscht hohen Aufwand einhergeht.

Die WO 2010/003836 A1 offenbart ein Verfahren zum Rekonstruieren eines Schallfelds mittels akustischer Nahfeld-Holographie, bei dem ein Geräusch mit einer gitterartigen Anordnung von Mikrofonen erfasst wird.

Der Aufsatz von Park Soon-Hong et al.: "Visualization of pass-by noise by means of moving frame acoustic holography", The Journal of the Acoustical Society of America, American Institute of Physics for the Acoustical Society of America, New York, NY, US Bd. 110, Nr. 5, 1. November 2001, Seiten 2326-2339, offenbart ein Verfahren zum Visualisieren eines Vorbeifahrtgeräuschs mittels akustischer Holographie.

Die WO 02/052542 A2 offenbart ein Verfahren zur Bestimmung eines Geräuschsignals, bei welchem das erfasste Signal anhand von Signaleigenschaften analysiert, mit vorgegebenen Geräuschmustern verglichen und basierend auf einem Vergleich einem Geräuschquellentyp zugeordnet wird.

Es besteht das Bedürfnis, die Geräuschimmissionen durch selbstangetrieben bewegte Gegenstände auf einfachere und schnellere Weise zu bestimmen.

Die Lösung dieser Aufgabe erfolgt durch ein Verfahren mit den Merkmalen des Anspruchs 1.

Ein erfindungsgemäßes Verfahren umfasst die Schritte:

-    Erfassen der Geräuschimmission durch den Gegenstand im Betrieb auf einem Prüfstand, insbesondere auf einem Rollenprüfstand, an mindestens einem Ort am Prüfstand, und
-    modellbasiertes Berechnen der zu erwartenden Geräuschimmission durch den längs der Bewegungsstrecke selbstangetrieben bewegten Gegenstand an dem mindestens einen Ort im Hörbereich der Bewegungsstrecke aus der erfassten Geräuschimmission an dem mindestens einen Ort am Prüfstand unter Verwendung einer ortsabhängigen Übertragungsfunktion.

Das messtechnische Erfassen der Geräuschimmission findet also nicht an einer realen Bewegungsstrecke, z. B. im Freien, statt, sondern an einem Prüfstand. Das heißt der Gegenstand wird nicht tatsächlich an einer Messeinrichtung vorbeibewegt, sondern lediglich am Prüfstand betrieben. Die Geräuschimmission, die sich bei einer Vorbeifahrt oder einer ähnlichen Bewegung ergeben würde, wird lediglich anhand eines physikalischen Modells berechnet. Es wird also gewissermaßen eine Vorbeifahrt oder dergleichen auf dem Prüfstand simuliert. Die Erfindung nutzt hierbei die Erkenntnis, dass mittels einer ortsabhängigen Übertragungsfunktion eine Vorhersage der Geräuschimmission an einem entfernten Empfangsort möglich ist, wenn die Geräuschemission des Gegenstands auf dem Prüfstand bekannt ist.

Der Berechnung kann das physikalische Modell eines Punktstrahlers zugrundegelegt werden.

Es hat sich herausgestellt, dass eine solche modellbasierte Berechnung unter Verwendung einer ortsabhängigen Übertragungsfunktion in vielen praktischen Fällen ausreichend ist, um für einen selbstangetrieben bewegbaren Gegenstand eine zuverlässige Prognose hinsichtlich der Geräuscherzeugung unter realen Bedingungen angeben zu können. Eine erfindungsgemäße Berechnung kann nicht nur für Vorbeifahrtsprognosen eingesetzt werden, sondern ganz allgemein für eine Geräuschimmissionsbestimmung an fiktiven Orten. Die Erfindung eröffnet daher vielfältige neue Möglichkeiten bei der Entwicklung von Fahrzeugen und dergleichen hinsichtlich der Geräuschabgabe.

Mittels der ortsabhängigen Übertragungsfunktion kann eine virtuelle Bewegungsstrecke definiert werden, das heißt die Geräuschimmission kann für mehrere Positionen berechnet werden, die sich auf einer virtuellen Bewegungsstrecke befinden.

Vorzugsweise wird die ortsabhängige Übertragungsfunktion unter Verwendung folgender Schritte überprüft:

- Erfassen der Geräuschimmission durch den tatsächlich längs einer Bewegungsstrecke selbstangetrieben bewegten Gegenstand an mindestens einem Ort im Hörbereich der Bewegungsstrecke,
- Erfassen von Messgrößen des bewegten Gegenstands, wie Geschwindigkeit, Wegstrecke, Motorlast und Motordrehzahl, während der selbstangetriebenen Bewegung des Gegenstands längs der Bewegungsstrecke,
- Erfassen der Geräuschimmission durch den Gegenstand bei Betrieb auf dem Prüfstand an mindestens einem Ort am Prüfstand mit den gleichen Werten der Messgrößen wie bei der Bewegung längs der Bewegungsstrecke, und
- In Beziehung setzen der erfassten Geräuschimmission an dem mindestens einen Ort im Hörbereich der Bewegungsstrecke und der erfassten Geräuschimmission an dem mindestens einen Ort am Prüfstand zueinander.

Insbesondere kann die erfasste Geräuschimmission an dem mindestens einen Ort im Hörbereich der Bewegungsstrecke mit der erfassten Geräuschimmission an dem mindestens einen Ort am Prüfstand verglichen werden, wobei anhand des Ergebnisses des Vergleichs die Allgemeingültigkeit der ortsabhängigen Übertragungsfunktion bestimmt wird. Mit anderen Worten kann die Vorhersagegüte der ortsabhängigen Übertragungsfunktion anhand eines Vergleichs des Ergebnisses einer Straßenmessung oder Außengeräuschmessung mit einer Prüfstandmessung überprüft werden.

Die Erfassung der Geräuschimmission umfasst bevorzugt eine Erfassung des Schalldruckpegels und/oder des Schalldruckspektrums. Die Erfassung kann hierbei insbesondere unter Verwendung eines Messmikrofons oder mehrerer Messmikrofone erfolgen.

Es kann eine ortsabhängige Übertragungsfunktion verwendet werden, welche die Schallübertragung von einer Schallquelle zu einem Schallempfänger im Frequenzraum in Abhängigkeit von der Position des Schallempfängers relativ zu der Schallquelle angibt.

Es kann vorgesehen sein, dass die Übertragungsfunktion in einem ersten Schritt dazu verwendet wird, aus der Geräuschimmission an dem mindestens einen Ort am Prüfstand die Schallemission am Ort einer Schallquelle des Gegenstands zu bestimmen, und in einem zweiten Schritt dazu verwendet wird, die Schallimmission an dem mindestens einen Ort im Hörbereich der Bewegungsstrecke ausgehend von der Schallemission am Ort der Schallquelle zu bestimmen. Dadurch wird dem Umstand Rechnung getragen, dass die Erfassung der Geräuschimmission am Prüfstand üblicherweise nicht direkt am Ort einer Schallquelle erfolgen kann, sondern lediglich in einer gewissen Entfernung von der Schallquelle, beispielsweise in einer Entfernung von etwa 50 cm. Die Bestimmung der Schallemission kann die Bestimmung der Quellenstärke und/oder die Bestimmung des Quellenspektrums umfassen. In dem ersten Schritt, der als Rückrechnung bezeichnet werden kann, muss keine Ortsabhängigkeit berücksichtigt werden, weil der Ort der Schallquelle und die Position des Mikrofons jeweils fest sind. Die beiden genannten Schritte können für mehrere Schallquellen des Gegenstands durchgeführt werden, insbesondere für alle bekannten maßgeblichen Schallquellen des Gegenstands. Die Genauigkeit der modellbasierten Berechnung der Geräuschimmission an dem mindestens einen Ort im Hörbereich der Bewegungsstrecke wird dadurch gesteigert.

Erfindungsgemäß wird eine ortsabhängige Übertragungsfunktion verwendet, welche auf der Schallabstrahlung einer punktförmigen Schallquelle in einem homogenen Raum beruht. Solche Übertragungsfunktionen sind auf dem Gebiet der Akustik bekannt und in einem Computer leicht zu implementieren. Die damit verbundenen Näherungen haben sich für viele Anwendungssituationen als unproblematisch herausgestellt. Insbesondere kann die folgende Funktion als ortsabhängige Übertragungsfunktion verwendet werden:

$$H(R) = C(\omega)/R\ e^{-i\omega R/c} \qquad\qquad (1),$$

wobei R der Abstand des Empfangsorts von der punktförmigen Schallquelle, $C(\omega)$ ein frequenzabhängiger Faktor, $\omega$ die Kreisfrequenz und c die Schallgeschwindigkeit ist.

Erfindungsgemäß wird eine ortsabhängige Übertragungsfunktion verwendet, in welcher der Abstand von der punktförmigen Schallquelle als Funktion einer Positionskoordinate der Bewegungsstrecke angegeben ist. Dadurch ist das Simulieren einer Vorbeifahrt erleichtert. Die Geräuschimmission kann in einfacher und schneller Weise zu jedem beliebigen Zeitpunkt der Vorbeifahrt berechnet werden, indem die dem Zeitpunkt entsprechende Positionskoordinate der Bewegungsstrecke eingesetzt wird. Insbesondere kann die folgende Funktion als ortsabhängige Übertragungsfunktion verwendet werden:

$$H(x) = C(\omega)/R(x)\ e^{-i\omega R(x)/c} \qquad\qquad (2),$$

wobei x eine Positionskoordinate auf einer in die Bewegungsrichtung weisenden Koordinatenachse ist.

Vorzugsweise befindet sich der mindestens eine Ort am Prüfstand im Nahbereich einer Schallquelle des Gegenstands. Das heißt das Erfassen der Geräuschimmission am Prüfstand findet bevorzugt im Nahbereich einer bekannten Schallquelle des Gegenstands statt, z. B. im Nahbereich eines Endrohrs einer Abgasanlage eines Kraftfahrzeugs, im Nahbereich einer Ansauganlage eines Kraftfahrzeugs und/oder im Nahbereich eines Reifens eines Kraftfahrzeugs. Eine solche Erfassung kann in einfacher Weise mittels eines prüfstandsfesten oder mittels eines fahrzeugfesten Messmikrofons durchgeführt werden.

Der mindestens eine Ort im Hörbereich der Bewegungsstrecke befindet sich vorzugsweise im Fernbereich einer Schallquelle des Gegenstands, insbesondere im Fernbereich des Endrohrs einer Abgasanlage eines Kraftfahrzeugs. Dies trägt dem Umstand Rechnung, dass die durch einen selbstangetrieben bewegten Gegenstand erzeugten Geräuschimmissionen üblicherweise im Fernbereich zu bestimmen sind. Zudem ist die Berechnung vereinfacht, wenn ein Ort im Fernbereich der Schallquelle betrachtet wird.

Eine Ausführungsform der Erfindung sieht vor, dass zum modellbasierten Berechnen der zu erwartenden Geräuschimmission durch den längs der Bewegungsstrecke selbstangetrieben bewegten Gegenstand mittels der ortsabhängigen Übertragungsfunktion die Geräuschimmissionen an mehreren Berechnungspositionen berechnet werden, wobei die Berechnungspositionen derart gewählt werden, dass sie der Lage des Orts im Hörbereich der Bewegungsstrecke relativ zum Gegenstand zu verschiedenen Zeitpunkten der Bewegung entsprechen. Auf diese Weise kann eine Vorbeifahrt simuliert werden, ohne dass hierfür eine Reihe durchgetakteter Mikrofone vorhanden sein muss. Die Berechnungspositionen können entlang der Bewegungsstrecke verteilt sein, insbesondere gleichmäßig. Die Geräuschimmissionen können auch kontinuierlich oder quasikontinuierlich entlang der gesamten Bewegungsstrecke berechnet werden.

Es ist bevorzugt, dass bei der modellbasierten Berechnung der zu erwartenden Geräuschimmission durch den längs der Bewegungsstrecke selbstangetrieben bewegten Gegenstand an dem mindestens einen Ort im Hörbereich der Bewegungsstrecke der Doppler-Effekt vernachlässigt wird. Dadurch wird der Rechenaufwand beträchtlich reduziert. Es hat sich erwiesen, dass die Vorhersagegüte trotz Vernachlässigung des Doppler-Effekts akzeptabel ist.

Eine weitere Ausführungsform der Erfindung sieht vor, dass die Bewegungsstrecke zumindest im Wesentlichen linear ist und/oder eine Länge von wenigstens 20m, vorzugsweise von 20m bis 40m, aufweist. Eine derartige Bewegungsstrecke liegt vielen vorgeschriebenen Bewegungsmessungen wie zum Beispiel Vorbeifahrtsmessungen zugrunde. In Innenräumen können so lange Bewegungsstrecken üblicherweise nicht bereitgestellt werden.

Vorzugsweise werden bei dem modellbasierten Berechnen der zu erwartenden Geräuschimmission mehrere Schallquellen, gegebenenfalls einschließlich der den Bodenreflexionen zugeordneten Spiegelquellen, berücksichtigt.

Die modellbasierte Berechnung der zu erwartenden Geräuschimmission durch den längs der Bewegungsstrecke selbstangetrieben bewegten Gegenstand an dem mindestens einen Ort im Hörbereich der Bewegungsstrecke wird mittels eines Computers durchgeführt. Der Computer kann einem Prüfstand zugeordnet sein. Mittels eines Computers können insbesondere Geräuschimmissionen unter unterschiedlichen Betriebsbedingungen und/oder mit unterschiedlichen geometrischen Vorgaben wie Länge oder Lage der Bewegungsstrecke automatisiert berechnet werden. Die virtuelle Bewegungsstrecke, auf welche sich die Berechnung bezieht, kann hierbei auch einen gekrümmten bzw. komplexen Verlauf aufweisen.

Die Erfindung betrifft auch ein Verfahren zur Optimierung der Geräuschabgabe eines selbst angetrieben bewegten Gegenstands, insbesondere eines motorbetriebenen Fahrzeugs.

Solche Verfahren sind insbesondere bei der Entwicklung von Fahrzeugen und dergleichen notwendig, um Lärmbelästigungen im späteren Betrieb zu vermeiden und/oder einen vorgegebenen Klang beim Betrieb sicherzustellen. Die Bestimmung der Geräuschabgabe unter realen Bedingungen, also zum Beispiel in Stra-ßenmessungen, ist jedoch mit einem so hohen Aufwand verbunden, dass sie im Allgemeinen nicht oft wiederholt werden kann.

Erfindungsgemäß sind folgende Schritte vorgesehen:

- modellbasierte Berechnung der zu erwartenden Geräuschimmission durch den längs einer Bewegungsstrecke selbst angetrieben bewegten Gegenstand an mindestens einem Ort im Hörbereich der Bewegungsstrecke mittels eines wie vorstehend beschriebenen Verfahrens und
- Verändern von geräuscherzeugenden Einflussgrößen des Gegenstands unter Berücksichtigung der berechneten Geräuschimmission.

Dadurch dass das Verändern der geräuscherzeugenden Einflussgrößen anhand der berechneten Geräuschimmission erfolgt, sind keine aufwändigen Außengeräuschmessungen erforderlich. Demgemäß können im Rahmen der Entwicklung wesentlich zahlreichere Veränderungen von Einflussgrößen vorgenommen werden, wodurch die Entwicklung insgesamt unterstützt und beschleunigt wird. Eine Erfassung von Geräuschimmissionen kann ergänzend zur Berechnung durchgeführt werden.

Es kann vorgesehen sein, dass die Anteile mehrerer unterschiedlicher Schallquellen des Gegenstands an der Geräuschimmission bestimmt werden und das Verändern von geräuscherzeugenden Einflussgrößen des Gegenstands unter zusätzlicher Berücksichtigung der Anteile der Schallquellen an der Geräuschimmission erfolgt. Dadurch kann die Optimierung der Geräuschabgabe beschleunigt werden, weil die Veränderung von Einflussgrößen auf solche Einflussgrößen beschränkt werden kann, die einen relativ hohen Anteil an der Geräuschimmission aufweisen. Mit anderen Worten kann sich ein Entwickler auf die dominante Schallquelle und die zugehörigen Einflussgrößen konzentrieren. Beispielsweise können die Anteile der Abgasanlage, der Ansauganlage und der Reifen eines motorbetriebenen Fahrzeugs an der Geräuschimmission bestimmt werden. Falls beispielsweise die Ansauganlage unter bestimmten Betriebsbedingungen und für einen bestimmten Ort im Fernbereich nur einen geringen Anteil an der Geräuschimmission aufweist, sind die Ansauganlage betreffende Veränderungen eher unergiebig für eine weitere Optimierung. Entsprechende Erkenntnisse sind für einen Entwickler überaus hilfreich.

Die Anteile der Schallquellen an der Geräuschimmission können durch Erfassen der Geräuschimmissionen durch den Gegenstand im Betrieb auf einem Prüfstand an verschiedenen Orten am Prüfstand bestimmt werden. Hierfür können mehrere Messmikrofone an verschiedenen Orten am Prüfstand angeordnet sein, vorzugsweise im Nahbereich der jeweiligen Schallquellen. Die Bestimmung der Anteile kann anhand eines Vergleichs der Schalldruckpegel und/oder der Schalldruckspektren erfolgen.

Weiterhin betrifft die Erfindung einen Prüfstand, insbesondere einen Rollenprüfstand, mit Mitteln zum Erfassen der Geräuschimmission durch einen selbstangetrieben bewegbaren Gegenstand im Betrieb auf dem Prüfstand an mindestens einem Ort am Prüfstand und Mitteln zum modellbasierten Berechnen der zu erwartenden Geräuschimmission durch den längs einer Bewegungsstrecke selbstangetrieben bewegten Gegenstand an mindestens einem Ort im Hörbereich der Bewegungsstrecke aus einer erfassten Geräuschimmission an mindestens einem Ort am Prüfstand unter Verwendung einer ortsabhängigen Übertragungsfunktion.

Erfindungsgemäß ist vorgesehen, dass die ortsabhängige Übertragungsfunktion auf der Schallabstrahlung einer punktförmigen Schallquelle in einem homogenen Raum beruht und in der ortsabhängigen Übertragungsfunktion der Abstand von der punktförmigen Schallquelle als Funktion einer Positionskoordinate der Bewegungsstrecke angegeben ist.

An einem derartigen Prüfstand können vielfältige Erkenntnisse hinsichtlich der Geräuschabgabe von Fahrzeugen und dergleichen erlangt werden. Der Prüfstand kann eine elektronische Steuereinheit umfassen, welche die Mittel zum modellbasierten Berechnen der zu erwartenden Geräuschimmission aufweist. Die Mittel zum Erfassen der Geräuschimmission können Messmikrofone umfassen, die am Gegenstand und/oder am Prüfstand angebracht sind.

Bevorzugt umfasst der Prüfstand eine Antriebseinheit zum Antreiben und/oder Bremsen des Gegenstands und eine mit der Antriebseinheit verbundene elektronische Steuereinrichtung, wobei die elektronische Steuereinrichtung dazu ausgebildet ist, die Antriebseinheit in einem geschwindigkeitsgeregelten Modus und/oder in einem lastgeregelten Modus zu betreiben. Es ist also bevorzugt, dass ein erfindungsgemäßer Prüfstand eine Tempomat-Funktion und/oder eine Fahrmassensimulations-Funktion aufweist. Dadurch können die Einflussgrößen konstant gehalten werden.

Die Erfindung betrifft ferner ein Computerprogrammprodukt mit einem Computerprogramm, das zur Durchführung eines wie eingangs beschriebenen Verfahrens ausgebildet ist, wenn das Computerprogramm auf einem Computer eines Prüfstands oder einer mobilen Messeinrichtung ausgeführt wird. Der Computer kann in eine zentrale Steuereinheit des Prüfstands integriert sein.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnung beschrieben.

Fig. 1     ist eine vereinfachte Draufsicht auf ein motorgetriebenes Fahrzeug, das sich längs einer Bewegungsstrecke bewegt.

Fig. 2     ist eine vereinfachte Draufsicht auf einen erfindungsgemäßen Prüfstand.

Fig. 3     zeigt Schritte eines erfindungsgemäßen Verfahrens zur modellbasierten Berechnung der zu erwartenden Geräuschimmission durch das in Fig. 1 gezeigte Fahrzeug an mindestens einem Ort im Hörbereich der Bewegungsstrecke.

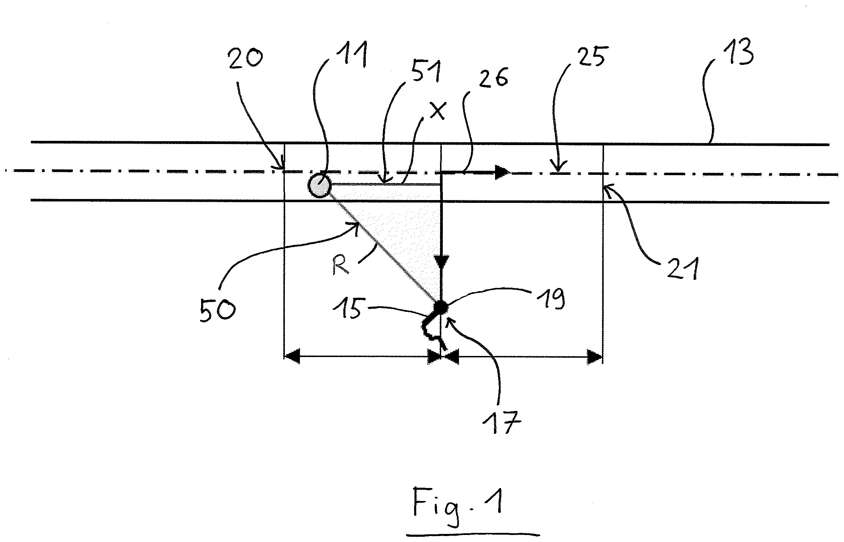

Fig. 1 zeigt ein lediglich schematisch dargestelltes Fahrzeug 11, das sich motorgetrieben auf einer Straße 13 an einem Schallempfänger 15 vorbeibewegt. Die im Verlauf der Fahrzeugbewegung am Ort 17 des Schallempfängers 15 erzeugten Geräuschimmissionen werden als "Vorbeifahrtgeräusch" bezeichnet und unterliegen gesetzlichen Auflagen. Eine Erfassung des Vorbeifahrtgeräuschs kann mittels eines am betreffenden Ort 17 aufgestellten Messmikrofons 19 durchgeführt werden. Das Fahrzeug 11 wird hierbei mit vorgegebenen Betriebsparametern wie Geschwindigkeit und Motordrehzahl zwischen einem Eingangspunkt 20 und einem Ausgangspunkt 21 bewegt, je nach Anwendung durch einen Fahrer oder autonom. Der zwischen dem Eingangspunkt 20 und dem Ausgangspunkt 21 befindliche Teil der Straße 13 bildet eine definierte Bewegungsstrecke 25. Die Bewegungsstrecke 25 ist hier linear, könnte grundsätzlich jedoch auch gekrümmt verlaufen. Weiterhin könnte die Bewegungsstrecke 25 auch auf einem Wasserweg oder einem Schienenweg gebildet sein. Die Position des Fahrzeugs 11 auf der Bewegungsstrecke 25 ist durch eine Positionskoordinate 51 gegeben, die nachfolgend mit x bezeichnet wird. Der Ursprung der zugehörigen Koordinatenachse 26 befindet sich definitionsgemäß auf der Höhe des Schallempfängers 15. Der Abstand 50 des Orts 17 des Schallempfängers 15 vom Fahrzeug 11 wird nachfolgend mit R bezeichnet.

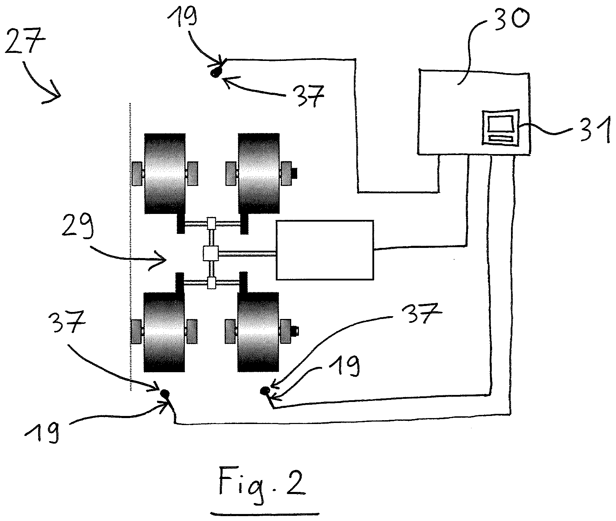

Die Erfassung eines Vorbeifahrtgeräuschs an einer Straße 13 wie in Fig. 1 gezeigt wird auch als "Straßenmessung" bezeichnet. Um solche Straßenmessungen zu vermeiden, kann eine modellbasierte Berechnung der von dem fahrenden Fahrzeug 11 an dem Ort 17 des Schallempfängers 15 erzeugten Geräuschimmissionen unter Verwendung des in Fig. 2 gezeigten erfindungsgemäßen Prüfstands 27 durchgeführt werden. Der Prüfstand 27 ist vorzugsweise als Rollenprüfstand ausgebildet und umfasst eine Antriebseinheit 29 zum Antreiben und/oder Bremsen eines in Fig. 2 nicht gezeigten Fahrzeugs, mehrere Messmikrofone 19 sowie eine zentrale Bedien- und Steuereinheit 30, die mit der Antriebseinheit 29 und mit den Messmikrofonen 19 in Verbindung steht. Die zentrale Bedien- und Steuereinheit 30 umfasst einen Computer 31. Die Messmikrofone 19 befinden sich an jeweiligen Messpositionen 37 und können am Prüfstand 27 oder am Fahrzeug befestigt sein. Vorzugsweise sind die Messmikrofone 19 im Nahbereich von jeweiligen Schallquellen des Fahrzeugs angeordnet, also zum Beispiel am Endrohr der Abgasanlage, am Motor und/oder neben den Reifen.

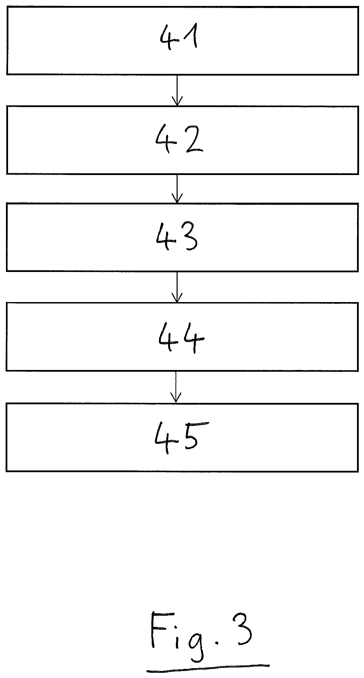

Gemäß dem Diagramm von Fig. 3 wird zunächst in einem Schritt 41 das Fahrzeug in einem Fahrmassensimulations-Modus an der Antriebseinheit 29 des Prüfstands 27 betrieben. Während dieses Betriebs werden in einem Schritt 42 mittels der Messmikrofone 19 die an den Messpositionen 37 erzeugten Geräuschimmissionen erfasst, vorzugsweise in Form des Schalldruckpegels und/oder des Schalldruckspektrums, und in einem Speicher des Computers 31 gespeichert.

In einem Schritt 43 werden mittels des Computers 31 anhand der erfassten Geräuschimmissionen an den Messpositionen 37 unter Verwendung einer Übertragungsfunktion die Schallemissionen von vorgegebenen Schallquellen des Fahrzeugs berechnet. Dies umfasst die Berechnung der Quellenstärke und des Quellenspektrums für die einzelnen Schallquellen.

Optional werden in einem Schritt 44 die jeweiligen Anteile der Schallquellen am Geräuschspektrum bestimmt.

Anschließend wird in einem Schritt 45 mittels des Computers 31 unter Verwendung der ortsabhängigen Übertragungsfunktion die Geräuschimmission an einem fiktiven Ort berechnet, der sich vorzugsweise im Fernbereich der Schallquellen befindet. Hierbei werden die Schallquellen als Punktquellen betrachtet und die ortsabhängige Übertragungsfunktion wird dazu verwendet, jeweils die Schallübertragung von dem Ort der Schallquelle zu dem fiktiven Ort zu bestimmen.

Bevorzugt wird eine ortsabhängige Übertragungsfunktion verwendet, in welcher der Abstand R von der punktförmigen Schallquelle als Funktion der Positionskoordinate x der Bewegungsstrecke 25 (Fig. 1) angegeben ist. Insbesondere kann die folgende Funktion als ortsabhängige Übertragungsfunktion verwendet werden:

$$H(x) = C(\omega)/R(x)\, e^{-i\omega R(x)/c} \qquad\qquad (2)$$

Die in Schritt 45 durchgeführte Berechnung wird für eine Reihe von fiktiven Orten durchgeführt, die entlang der Bewegungsstrecke 25 verteilt angeordnet sind. Dies ist in einfacher Weise möglich, da in der Übertragungsfunktion H(x) die Abhängigkeit des Abstands R von der Positionskoordinate x bereits berücksichtigt ist. Die entsprechende Abhängigkeit $R(x)$ kann durch einfache geometrische Erwägungen bestimmt werden. Auf die beschriebene Weise wird eine Vorbeifahrt des Fahrzeugs 11 an einem Schallempfänger 15 (Fig. 1) simuliert. Die berechneten Geräuschimmissionen können in vielfältiger Weise für Zwecke des Lärmschutzes und des Sound Designs verwendet werden.

Die ortsabhängige Übertragungsfunktion kann durch einen Vergleich des Ergebnisses einer Straßenmessung oder Außengeräuschmessung mit einer Prüfstandmessung überprüft werden.

Insgesamt ermöglicht die Erfindung eine besonders kostengünstige und schnell durchzuführende Ermittlung des Schallprofils bewegter selbstangetriebener Gegenstände wie Kraftfahrzeuge.

Bezugszeichenliste

| | |
|---|---|
| 11 | Fahrzeug |
| 13 | Straße |
| 15 | Schallempfänger |
| 17 | Ort des Schallempfängers |
| 19 | Messmikrofon |
| 20 | Eingangspunkt |
| 21 | Ausgangspunkt |

| 25 | Bewegungsstrecke |
|---|---|
| 26 | Koordinatenachse |
| 27 | Prüfstand |
| 29 | Antriebseinheit |
| 30 | Bedien- und Steuereinheit |
| 31 | Computer |
| 37 | Messposition |
| 41-45 | Schritte |
| 50 | Abstand |
| 51 | Positionskoordinate |

**Patentansprüche**

1. Verfahren zur modellbasierten Berechnung der zu erwartenden Geräuschimmission durch einen längs einer Bewegungsstrecke (25) selbstangetrieben bewegten Gegenstand (11), insbesondere ein motorgetriebenes Fahrzeug, an mindestens einem Ort (17) im Hörbereich der Bewegungsstrecke (25), mit den Schritten:

   - Erfassen der Geräuschimmission durch den Gegenstand (11) im Betrieb auf einem Prüfstand (27), insbesondere Rollenprüfstand, an mindestens einem Ort (37) am Prüfstand (27), und
   - modellbasiertes Berechnen der zu erwartenden Geräuschimmission durch den längs der Bewegungsstrecke (25) selbstangetrieben bewegten Gegenstand (11) an dem mindestens einen Ort (17) im Hörbereich der Bewegungsstrecke (25) aus der erfassten Geräuschimmission an dem mindestens einen Ort (37) am Prüfstand (27) unter Verwendung einer ortsabhängigen Übertragungsfunktion,

   wobei die modellbasierte Berechnung der zu erwartenden Geräuschimmission durch den längs der Bewegungsstrecke (25) selbstangetrieben bewegten Gegenstand (11) an dem mindestens einen Ort (17) im Hörbereich der Bewegungsstrecke (25) mittels eines Computers (31) durchgeführt wird, wobei eine ortsabhängige Übertragungsfunktion verwendet wird, welche auf der Schallabstrahlung einer punktförmigen Schallquelle in einem homogenen Raum beruht, und wobei eine ortsabhängige Übertragungsfunktion verwendet wird, in welcher der Abstand (50) von der punktförmigen Schallquelle als Funktion einer Positionskoordinate (26) der Bewegungsstrecke (25) angegeben ist.

2. Verfahren nach Anspruch 1,
   dadurch **gekennzeichne**t, dass
   die ortsabhängige Übertragungsfunktion unter Verwendung folgender Schritte überprüft wird:

   - Erfassen der Geräuschimmission durch den tatsächlich längs einer Bewegungsstrecke (25) selbstangetrieben bewegten Gegenstand (11) an mindestens einem Ort (17) im Hörbereich der Bewegungsstrecke (25),
   - Erfassen von Messgrößen des bewegten Gegenstands (11), wie Geschwindigkeit, Wegstrecke, Motorlast und Motordrehzahl, während der selbstangetriebenen Bewegung des Gegenstands (11) längs der Bewegungsstrecke (25),
   - Erfassen der Geräuschimmission durch den Gegenstand (11) bei Betrieb auf dem Prüfstand (27) an mindestens einem Ort (37) am Prüfstand (27) mit den gleichen Werten der Messgrößen wie bei der Bewegung längs der Bewegungsstrecke (25), und
   - In Beziehung setzen der erfassten Geräuschimmission an dem mindestens einen Ort (17) im Hörbereich der Bewegungsstrecke (25) und der erfassten Geräuschimmission an dem mindestens einen Ort (37) am Prüfstand (27) zueinander.

3. Verfahren nach Anspruch 1 oder 2,
   **dadurch gekennzeichnet, dass**
   die Erfassung der Geräuschimmission eine Erfassung des Schalldruckpegels und/oder des Schalldruckspektrums umfasst.

4. Verfahren nach einem der vorstehenden Ansprüche,
   **dadurch gekennzeichnet, dass**
   die Übertragungsfunktion in einem ersten Schritt dazu verwendet wird, aus der Geräuschimmission an dem mindestens einen Ort (37) am Prüfstand (27) die Schallemission am Ort einer Schallquelle des Gegenstands (11) zu bestimmen und in einem zweiten Schritt dazu verwendet wird, die Schallimmission an dem mindestens einen Ort (17) im Hörbereich der Bewegungsstrecke (25) ausgehend von der Schallemission am Ort der Schallquelle zu bestimmen.

5. Verfahren nach einem der vorstehenden Ansprüche,
**dadurch gekennzeichnet, dass**
sich der mindestens eine Ort (37) am Prüfstand (27) im Nahbereich einer Schallquelle des Gegenstands (11) befindet und/oder dass sich der mindestens eine Ort (17) im Hörbereich der Bewegungsstrecke (25) im Fernbereich einer Schallquelle des Gegenstands (11) befindet.

6. Verfahren nach einem der vorstehenden Ansprüche,
**dadurch gekennzeichnet, dass**
zum modellbasierten Berechnen der zu erwartenden Geräuschimmission durch den längs der Bewegungsstrecke (25) selbstangetrieben bewegten Gegenstand (11) mittels der ortsabhängigen Übertragungsfunktion die Geräuschimmissionen an mehreren Berechnungspositionen berechnet werden, wobei die Berechnungspositionen derart gewählt werden, dass sie der Lage des Orts (17) im Hörbereich der Bewegungsstrecke (25) relativ zum Gegenstand (11) zu verschiedenen Zeitpunkten der Bewegung entsprechen.

7. Verfahren nach einem der vorstehenden Ansprüche,
**dadurch gekennzeichnet, dass**
bei der modellbasierten Berechnung der zu erwartenden Geräuschimmission durch den längs der Bewegungsstrecke (25) selbstangetrieben bewegten Gegenstand (11) an dem mindestens einen Ort (17) im Hörbereich der Bewegungsstrecke (25) der Doppler-Effekt vernachlässigt wird.

8. Verfahren nach einem der vorstehenden Ansprüche,
**dadurch gekennzeichnet, dass**
die Bewegungsstrecke (25) zumindest im Wesentlichen linear ist und/oder eine Länge von wenigstens 20m, vorzugsweise von 20m bis 40m, aufweist.

9. Verfahren zur Optimierung der Geräuschabgabe eines selbst angetrieben bewegten Gegenstands (11), insbesondere eines motorbetriebenen Fahrzeugs, mit den Schritten:

- modellbasierte Berechnung der zu erwartenden Geräuschimmission durch den längs einer Bewegungsstrecke (25) selbst angetrieben bewegten Gegenstand (11) an mindestens einem Ort (17) im Hörbereich der Bewegungsstrecke (25) mittels eines Verfahrens nach einem der vorstehenden Ansprüche und
- Verändern von geräuscherzeugenden Einflussgrößen des Gegenstands (11) unter Berücksichtigung der berechneten Geräuschimmission.

10. Verfahren nach Anspruch 9,
**dadurch gekennzeichnet, dass**

die Anteile mehrerer unterschiedlicher Schallquellen des Gegenstands (11) an der Geräuschimmission bestimmt werden und das Verändern von geräuscherzeugenden Einflussgrößen des Gegenstands (11) unter zusätzlicher Berücksichtigung der Anteile der Schallquellen an der Geräuschimmission erfolgt, insbesondere wobei die Anteile der Schallquellen an der Geräuschimmission durch Erfassen der Geräuschimmissionen durch den Gegenstand (11) im Betrieb auf einem Prüfstand (27) an verschiedenen Orten (37) am Prüfstand (27) bestimmt werden.

11. Prüfstand (27), insbesondere Rollenprüfstand,

mit Mitteln (19) zum Erfassen der Geräuschimmission durch einen selbstangetrieben bewegbaren Gegenstand (11) im Betrieb auf dem Prüfstand (27) an mindestens einem Ort (37) am Prüfstand und Mitteln (31) zum modellbasierten Berechnen der zu erwartenden Geräuschimmission durch den längs einer Bewegungsstrecke (25) selbstangetrieben bewegten Gegenstand (11) an mindestens einem Ort (17) im Hörbereich der Bewegungsstrecke (25) aus einer erfassten Geräuschimmission an mindestens einem Ort (37) am Prüfstand (27) unter Verwendung einer ortsabhängigen Übertragungsfunktion, wobei die ortsabhängige Übertragungsfunktion auf der Schallabstrahlung einer punktförmigen Schallquelle in einem homogenen Raum beruht und wobei in der ortsabhängigen Übertragungsfunktion der Abstand (50) von der punktförmigen Schallquelle als Funktion einer Positionskoordinate (26) der Bewegungsstrecke (25) angegeben ist.

**12.** Prüfstand nach Anspruch 11
**dadurch gekennzeichnet, dass**
der Prüfstand (27) eine Antriebseinheit (29) zum Antreiben und/oder Bremsen des Gegenstands (11) und eine mit der Antriebseinheit (29) verbundene elektronische Steuereinrichtung (30) umfasst, wobei die elektronische Steuereinrichtung (30) dazu ausgebildet ist, die Antriebseinheit (29) in einem geschwindigkeitsgeregelten Modus und/oder in einem lastgeregelten Modus zu betreiben.

**13.** Computerprogrammprodukt
mit einem Computerprogramm, das zur Durchführung eines Verfahrens nach einem der Ansprüche 1 bis 8 ausgebildet ist, wenn das Computerprogramm auf einem Computer (31) eines Prüfstands (27) oder einer mobilen Messeinrichtung ausgeführt wird.

**Claims**

**1.** A method for a model-based calculation of the noise immission to be expected by an object (11) moving in a self-propelled manner along a movement path (25), in particular a motor-driven vehicle, at at least one location (17) in the audible range of the movement path (25), comprising the steps:

- detecting the noise immission by the object (11) during operation on a test stand (27), in particular a roller test stand, at at least one location (37) at the test stand (27), and
- performing a model-based calculation of the noise immission to be expected by the object (11) moving in a self-propelled manner along the movement path (25) at the at least one location (17) in the audible range of the movement path (25) from the detected noise immission at the at least one location (37) at the test stand (27) using a location-dependent transfer function,

wherein the model-based calculation of the noise immission to be expected by the object (11) moving in a self-propelled manner along the movement path (25) is performed at the at least one location (17) in the audible range of the movement path (25) by means of a computer (31), wherein a location-dependent transfer function is used which is based on the sound radiation of a point-shaped sound source in a homogeneous space, and wherein a location-dependent transfer function is used in which the distance (50) from the point-shaped sound source is specified as a function of a position coordinate (26) of the movement path (25).

**2.** A method according to claim 1,
**characterized in that**
the location-dependent transfer function is checked using the following steps:

- detecting the noise immission by the object (11) actually moving in a self-propelled manner along a movement path (25) at at least one location (17) in the audible range of the movement path (25),
- detecting measurement variables of the moving object (11), such as speed, distance, motor load and motor speed, during the self-propelled movement of the object (11) along the movement path (25),
- detecting the noise immission by the object (11) during operation on the test stand (27) at at least one location (37) at the test stand (27) with the same values of the measurement variables as during the movement along the movement path (25), and
- relating the detected noise immission at the at least one location (17) in the audible range of the movement path (25) to the detected noise immission at the at least one location (37) at the test stand (27).

**3.** A method according to claim 1 or 2,
**characterized in that**
the detection of the noise immission comprises detecting the sound pressure level and/or the sound pressure spectrum.

**4.** A method according to any one of the preceding claims,
**characterized in that**
the transfer function is used in a first step to determine the sound emission at the location of a sound source of the object (11) from the noise immission at the at least one location (37) at the test stand (27) and is used in a second step to determine the sound immission at the at least one location (17) in the audible range of the movement path (25) starting from the sound emission at the location of the sound source.

5. A method according to any one of the preceding claims,
   **characterized in that**

   the at least one location (37) at the test stand (27) is located in the near range of a sound source of the object (11), and/or
   **in that** the at least one location (17) in the audible range of the movement path (25) is located in the far range of a sound source of the object (11).

6. A method according to any one of the preceding claims,
   **characterized in that**,
   for the model-based calculation of the noise immission to be expected by the object (11) moving in a self-propelled manner along the movement path (25), the noise immissions are calculated at a plurality of calculation positions by means of the location-dependent transfer function, with the calculation positions being selected such that they correspond to the position of the location (17) in the audible range of the movement path (25) relative to the object (11) at different points in time of the movement.

7. A method according to any one of the preceding claims,
   **characterized in that**
   the Doppler effect is neglected in the model-based calculation of the noise immission to be expected by the object (11) moving in a self-propelled manner along the movement path (25) at the at least one location (17) in the audible range of the movement path (25).

8. A method according to any one of the preceding claims,
   **characterized in that**
   the movement path (25) is at least substantially linear and/or has a length of at least 20 m, preferably of 20 m to 40 m.

9. A method for optimizing the noise emission of an object (11) moving in a self-propelled manner, in particular a motor-driven vehicle, comprising the steps:

   - performing a model-based calculation of the noise immission to be expected by the object (11) moving in a self-propelled manner along a movement path (25) at at least one location (17) in the audible range of the movement path (25) by means of a method according to any one of the preceding claims, and
   - changing noise-generating influencing variables of the object (11), considering the calculated noise immission.

10. A method according to claim 9,
    **characterized in that**

    the proportions of a plurality of different sound sources of the object (11) in the noise immission are determined and the changing of noise-generating influencing variables of the object (11) takes place with additional consideration of the proportions of the sound sources in the noise immission, in particular wherein
    the proportions of the sound sources in the noise immission are determined by detecting the noise immissions by the object (11) during operation on a test stand (27) at various locations (37) at the test stand (27).

11. A test stand (27), in particular a roller test stand, comprising

    means (19) for detecting the noise immission by an object (11) movable in a self-propelled manner during operation on the test stand (27) at at least one location (37) at the test stand, and
    means (31) for a model-based calculation of the noise immission to be expected by the object (11) moving in a self-propelled manner along a movement path (25) at at least one location (17) in the audible range of the movement path (25) from a detected noise immission at at least one location (37) at the test stand (27) using a location-dependent transfer function,
    wherein the location-dependent transfer function is based on the sound radiation of a point-shaped sound source in a homogeneous space and wherein, in the location-dependent transfer function, the distance (50) from the point-shaped sound source is specified as a function of a position coordinate (26) of the movement path (25).

**12.** A test stand according to claim 11,
**characterized in that**
the test stand (27) comprises a drive unit (29) for driving and/or braking the object (11) and an electronic control device (30) connected to the drive unit (29), wherein the electronic control device (30) is configured to operate the drive unit (29) in a speed-controlled mode and/or in a load-controlled mode.

**13.** A computer program product
comprising a computer program which is configured to perform a method according to any one of the claims 1 to 8 when the computer program is executed on a computer (31) of a test stand (27) or a mobile measurement device.

**Revendications**

**1.** Procédé de calcul, basé sur un modèle, de l'immission de bruit à attendre d'un objet (11) déplacé de manière autopropulsée le long d'un trajet de déplacement (25), en particulier d'un véhicule motorisé, à au moins un endroit (17) dans la zone audible du trajet de déplacement (25), comprenant les étapes consistant à :

- détecter l'immission de bruit de l'objet (11) en fonctionnement sur un banc d'essai (27), en particulier sur un banc d'essai à rouleaux, à au moins un endroit (37) sur le banc d'essai (27), et
- calculer, en se basant sur un modèle, l'immission de bruit à attendre de l'objet (11) déplacé de manière autopropulsée le long du trajet de déplacement (25) audit au moins un endroit (17) dans la zone audible du trajet de déplacement (25) à partir de l'immission de bruit détectée audit au moins un endroit (37) sur le banc d'essai (27), en utilisant une fonction de transfert dépendante de l'endroit,

dans lequel
le calcul, basé sur un modèle, de l'immission de bruit à attendre de l'objet (11) déplacé de manière autopropulsée le long du trajet de déplacement (25) audit au moins un endroit (17) dans la zone audible du trajet de déplacement (25) s'effectue au moyen d'un ordinateur (31) en utilisant une fonction de transfert dépendante de l'endroit, qui est basée sur le rayonnement du son d'une source sonore ponctuelle dans un espace homogène, et en utilisant une fonction de transfert dépendante de l'endroit, dans laquelle la distance (50) par rapport à la source sonore ponctuelle est indiquée comme fonction d'une coordonnée de position (26) du trajet de déplacement (25).

**2.** Procédé selon la revendication 1,
**caractérisé en ce que**
la fonction de transfert dépendante de l'endroit est vérifiée en utilisant les étapes suivantes consistant à :

- détecter l'immission de bruit de l'objet (11) effectivement déplacé de manière autopropulsée le long d'un trajet de déplacement (25) à au moins un endroit (17) dans la zone audible du trajet de déplacement (25),
- détecter des grandeurs de mesure de l'objet (11) déplacé, telles que la vitesse, la distance parcourue, la charge du moteur et le régime du moteur, pendant le mouvement autopropulsé de l'objet (11) le long du trajet de déplacement (25),
- détecter l'immission de bruit de l'objet (11) en fonctionnement sur le banc d'essai (27) à au moins un endroit (37) sur le banc d'essai (27) avec les mêmes valeurs des grandeurs de mesure que lors du mouvement le long du trajet de déplacement (25), et
- mettre en relation l'immission de bruit détectée audit au moins un endroit (17) dans la zone audible du trajet de déplacement (25) et l'immission de bruit détectée audit au moins un endroit (37) sur le banc d'essai (27).

**3.** Procédé selon la revendication 1 ou 2,
**caractérisé en ce que**
la détection de l'immission de bruit comprend une détection du niveau de pression acoustique et/ou du spectre de pression acoustique.

**4.** Procédé selon l'une des revendications précédentes,
**caractérisé en ce que**
la fonction de transfert est utilisée dans une première étape pour déterminer l'émission sonore à l'endroit d'une source sonore de l'objet (11) à partir de l'immission de bruit audit au moins un endroit (37) sur le banc d'essai (27) et est utilisée dans une deuxième étape pour déterminer l'immission sonore audit au moins un endroit (17) dans la zone audible du trajet de déplacement (25) à partir de l'émission sonore à l'endroit de la source sonore.

**5.** Procédé selon l'une des revendications précédentes,
**caractérisé en ce que**
ledit au moins un endroit (37) sur le banc d'essai (27) se trouve dans la zone proche d'une source sonore de l'objet (11), et/ou en ce que ledit au moins un endroit (17) dans la zone audible du trajet de déplacement (25) se trouve dans la zone lointaine d'une source sonore de l'objet (11).

**6.** Procédé selon l'une des revendications précédentes,
**caractérisé en ce que**
pour le calcul, basé sur un modèle, de l'immission de bruit à attendre de l'objet (11) déplacé de manière autopropulsée le long du trajet de déplacement (25), les immissions de bruit sont calculées à plusieurs positions de calcul au moyen de la fonction de transfert dépendante de l'endroit, les positions de calcul étant choisies de manière à correspondre à la position de l'endroit (17) dans la zone audible du trajet de déplacement (25) par rapport à l'objet (11) à différents moments du mouvement.

**7.** Procédé selon l'une des revendications précédentes,
**caractérisé en ce que**
l'effet Doppler est négligé lors du calcul, basé sur un modèle, de l'immission de bruit à attendre de l'objet (11) déplacé de manière autopropulsée le long du trajet de déplacement (25) audit au moins un endroit (17) dans la zone audible du trajet de déplacement (25).

**8.** Procédé selon l'une des revendications précédentes,
**caractérisé en ce que**
le trajet de déplacement (25) est au moins sensiblement linéaire et/ou présente une longueur d'au moins 20 m, de préférence de 20 m à 40 m.

**9.** Procédé d'optimisation du dégagement de bruit d'un objet (11) déplacé de manière autopropulsée, en particulier d'un véhicule motorisé, comprenant les étapes consistant à :

- calculer, en se basant sur un modèle, l'immission de bruit à attendre de l'objet (11) déplacé de manière autopropulsée le long d'un trajet de déplacement (25) à au moins un endroit (17) dans la zone audible du trajet de déplacement (25) par un procédé selon l'une des revendications précédentes, et
- modifier les grandeurs d'influence de l'objet (11), générant le bruit, en tenant compte de l'immission de bruit calculée.

**10.** Procédé selon la revendication 9,
**caractérisé en ce que**
les proportions de plusieurs sources sonores différentes de l'objet (11) dans l'immission de bruit sont déterminées, et la modification des grandeurs d'influence de l'objet (11), générant le bruit, s'effectue en tenant compte en supplément des proportions des sources sonores dans l'immission sonore, en particulier les proportions des sources sonores dans l'immission de bruit sont déterminées en détectant les immissions de bruit de l'objet (11) en fonctionnement sur un banc d'essai (27) à différents endroits (37) sur le banc d'essai (27).

**11.** Banc d'essai (27), en particulier banc d'essai à rouleaux, comprenant

des moyens (19) conçus pour détecter l'immission de bruit d'un objet (11) déplacé de manière autopropulsée en fonctionnement sur le banc d'essai (27) à au moins un endroit (37) sur le banc d'essai, et
des moyens (31) conçus pour calculer, en se basant sur un modèle, l'immission de bruit à attendre de l'objet (11) déplacé de manière autopropulsée le long d'un trajet de déplacement (25) à au moins un endroit (17) dans la zone audible du trajet de déplacement (25) à partir d'une immission de bruit détectée à au moins un endroit (37) sur le banc d'essai (27) en utilisant une fonction de transfert dépendante de l'endroit,
la fonction de transfert dépendante de l'endroit étant basée sur le rayonnement du son d'une source sonore ponctuelle dans un espace homogène, et dans la fonction de transfert dépendante de l'endroit, la distance (50) par rapport à la source sonore ponctuelle est indiquée comme fonction d'une coordonnée de position (26) du trajet de déplacement (25).

**12.** Banc d'essai selon la revendication 11,
**caractérisé en ce que**
le banc d'essai (27) comprend une unité d'entraînement (29) conçue pour entraîner et/ou freiner l'objet (11) et un dispositif de commande électronique (30) relié à l'unité d'entraînement (29), le dispositif de commande électronique (30) étant conçu pour faire fonctionner l'unité d'entraînement (29) dans un mode à vitesse régulée et/ou dans un mode à charge régulée.

13. Produit de programme informatique
comprenant un programme informatique conçu pour mettre en oeuvre un procédé selon l'une des revendications 1 à 8, lorsque le programme informatique est exécuté sur un ordinateur (31) d'un banc d'essai (27) ou d'un dispositif de mesure mobile.

Fig.1

EP 3 726 417 B1

Fig. 2

```
┌─────────────────────────┐
│           41            │
└─────────────────────────┘
             │
             ▼
┌─────────────────────────┐
│           42            │
└─────────────────────────┘
             │
             ▼
┌─────────────────────────┐
│           43            │
└─────────────────────────┘
             │
             ▼
┌─────────────────────────┐
│           44            │
└─────────────────────────┘
             │
             ▼
┌─────────────────────────┐
│           45            │
└─────────────────────────┘
```

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010003836 A1

- WO 02052542 A2

**In der Beschreibung aufgeführte Nicht-Patentliteratur**

- Visualization of pass-by noise by means of moving frame acoustic holography. **VON PARK SOON-HONG et al.** The Journal of the Acoustical Society of America. American Institute of Physics for the Acoustical Society of America, 01. November 2001, vol. 110, 2326-2339